# EUROPEAN PATENT APPLICATION

(11) **EP 2 696 278 A2**
(43) Date of publication of application: **12.02.2014**
(21) Application number: 13002587.7
(22) Date of filing: 16.05.2013
(51) Int. Cl.: G06F 3/147

(54) **Mobile terminal and control method therefor**

(30) Priority: 09.08.2012 KR 20120087454
(71) Applicant: LG Electronics Inc., Seoul (KR)
(72) Inventor: Ravi, Kumar V. Vinnakota, 560071 Bangalore (IN); Pradeep, Kumar Mudgal, 560071 Bangalore (IN)
(74) Representative: Frenkel, Matthias Alexander

(57) **Abstract**

A mobile terminal capable of outputting moving pictures and a control method therefor are provided. A mobile terminal includes a display unit, a user input unit and a control unit. The display unit reproduces a first image corresponding to moving picture data. The user input unit receives at least one of objectives included in the first image, which is selected by a user. The control unit extracts image data related to the selected objective from the moving picture data, and performs a function related to the extracted image data.

## Description

### BACKGROUND OF THE INVENTION

### 1. Field of the Invention

The present disclosure relates to a mobile terminal capable of outputting moving pictures and a control method therefor.

### 2. Description of the Conventional Art

Terminals can be configured to perform various functions. As examples of the various function, there are a data and voice communication function, a function of photographing photographs or moving pictures, a voice storage function, a function of reproducing music files, a function of displaying images or videos, etc. Some mobile terminals include an additional function capable of executing games, and some terminals are implemented as multimedia devices. Moreover, recent mobile terminals enable a user to watch video or television programs by receiving broadcast or multicast signals.

Efforts for supporting and improving functions of the mobile terminal are continuously made. The efforts include not only change and improvement of structural components constituting the mobile terminal but also improvement of software or hardware.

In a case where a moving picture or image input through a camera is output in the mobile terminal, a user can feel inconvenience in watching a specific interesting object a specific interesting object, due to a plurality of objects (substances, figures, objectives or subjects) included in the image.

### SUMMARY OF THE INVENTION

Therefore, an aspect of the detailed description is to provide a mobile terminal and a control method therefor, which can effectively provide information on a specific objective in which a user is interested in.

To achieve these and other advantages and in accordance with the purpose of this specification, as embodied and broadly described herein, a mobile terminal includes a display unit configured to reproduce a first image corresponding to moving picture data; a user input unit configured to receive at least one of objectives included in the first image, which is selected by a user; and a control unit configured to extract image data related to the selected objective from the moving picture data, and perform a function related to the extracted image data.

In one exemplary embodiment, the control unit may control the display unit to reproduce a second image corresponding to the extracted image data.

In one exemplary embodiment, when the second image corresponding to the extracted image data is reproduced, other objectives, except the selected objective, included in the first image, may be stopped, or may not be displayed on the display unit.

In one exemplary embodiment, the control unit may store the extracted image data in a memory, based on a control command generated automatically or selected by the user.

In one exemplary embodiment, when a plurality of objectives are selected from the objectives included in the first image, the control unit may sequentially output images respectively corresponding to image data corresponding to the plurality of objectives, based on a predetermined reference.

In one exemplary embodiment, the control unit may output image data respectively corresponding to the plurality of objectives, based on an order in which the plurality of objectives are selected, and other objectives may be stopped when an image corresponding to any one of the plurality of objectives is reproduced.

In one exemplary embodiment, the control unit may change visual attribute information of the selected objective so that the selected objective in the first image is distinguished from one or more other objectives except the selected objective in the first image.

In one exemplary embodiment, the control unit may control the display unit to display the selected objective as a three-dimensional stereoscopic image.

In one exemplary embodiment, the control unit may output the selected objective as a three-dimensional stereoscopic image by changing the three-dimensional depth value of the selected objective or by changing visual attribute information of the selected objective and a region adjacent to the selected objective.

In one exemplary embodiment, the control unit may search for at least one function to be performed related to the selected objected, and output, on the display unit, one or more graphic images respectively corresponding to the searched functions so as to receive any one of the searched functions, which is selected by the user.

In one exemplary embodiment, if any one of the one or more graphic images is selected, the control unit may output an execution screen of the function corresponding to the selected graphic image, and output image data corresponding to the selected objective in one region on the display unit.

In one exemplary embodiment, the control unit may extract image data corresponding to a time range selected by the user or a reference time range from the moving picture data.

In one exemplary embodiment, when the first image is an image streaming-reproduced based on moving picture data received from an external server, the control unit may previously receive a frame in a predetermined range, related to selected objective, in the moving picture data so as to track the selected objective.

In one exemplary embodiment, the selection of at least one objective from the first image may be performed through a user's touch input while the first image is being reproduced or in the state in which the reproduction of the first image is stopped.

In one exemplary embodiment, the control unit may identify an objective output at a point corresponding to a touch trace according to the touch input in the first image, and select the identified objective.

To achieve these and other advantages and in accordance with the purpose of this specification, as embodied and broadly described herein, a control method for a mobile terminal includes outputting an image input through a camera on a display unit; receiving at least one of a plurality of objectives included in the image, which is selected by a user, and monitoring the selected objective; and obtaining moving picture data corresponding to monitoring formation on the selected objective.

In one exemplary embodiment, when the selected objective is out of the view of the camera in the monitoring, alarm information using at least one of visual, auditory and haptic methods may be output.

In one exemplary embodiment, the selected objective may be visually distinguished from one or more other objectives included in the image.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWING

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram illustrating a mobile terminal according to an exemplary embodiment;
FIGS. 2A and 2B are perspective views illustrating an example of the mobile terminal viewed from the front according to the exemplary embodiment;
FIG. 3 is a flowchart illustrating a control method for a mobile terminal according to an exemplary embodiment;
FIGS. 4A and 4B are conceptual views illustrating the control method described in FIG. 3;
FIG. 5 is a conceptual view illustrating a method for selecting a reproduction section of a selected object in the mobile terminal according to the exemplary embodiment;
FIGS. 6A to 6D are conceptual views illustrating a method for reproducing a selected object in the mobile terminal according to the exemplary embodiment;
FIGS. 7A to 7C are conceptual views illustrating a method for selecting a plurality of objectives in the mobile terminal according to the exemplary embodiment;
FIGS. 8A and 8B are conceptual views illustrating a method for performing a function related to a selected objective in the mobile terminal according to the exemplary embodiment;
FIG. 9 is a flowchart illustrating a control method for a mobile terminal according to another exemplary embodiment;
FIGS. 10 and 11 are conceptual views illustrating the control method described in FIG. 9; and
FIG. 12 is a conceptual view illustrating a control method based on the movement of a selected objective in the mobile terminal according to the exemplary embodiment.
FIGS. 13 is conceptual views illustrating a method for editing an image in the mobile terminal according to the exemplary embodiment.

### DETAILED DESCRIPTION OF EXEMPLARY EMBODIMENTS

Hereinafter, a mobile terminal according to the present invention will be explained in more detail with reference to the attached drawings. The suffixes attached to components of the wireless speaker, such as 'module' and 'unit or portion' were used for facilitation of the detailed description of the present invention. Therefore, the suffixes do not have different meanings from each other.

A terminal may be implemented in various types. For instance, the terminal in the present description includes a mobile terminal such as a portable phone, a smart phone, a notebook computer, a digital broadcasting terminal, Personal Digital Assistants (PDA), Portable Multimedia Player (PMP), a navigation system, and a fixed terminal such as a digital TV and a desktop computer. It is assumed that the terminal of the present invention is a mobile terminal. However, it will be obvious to those skilled in the art that the present invention may be also applicable to the fixed terminal, except for specific configurations for mobility.

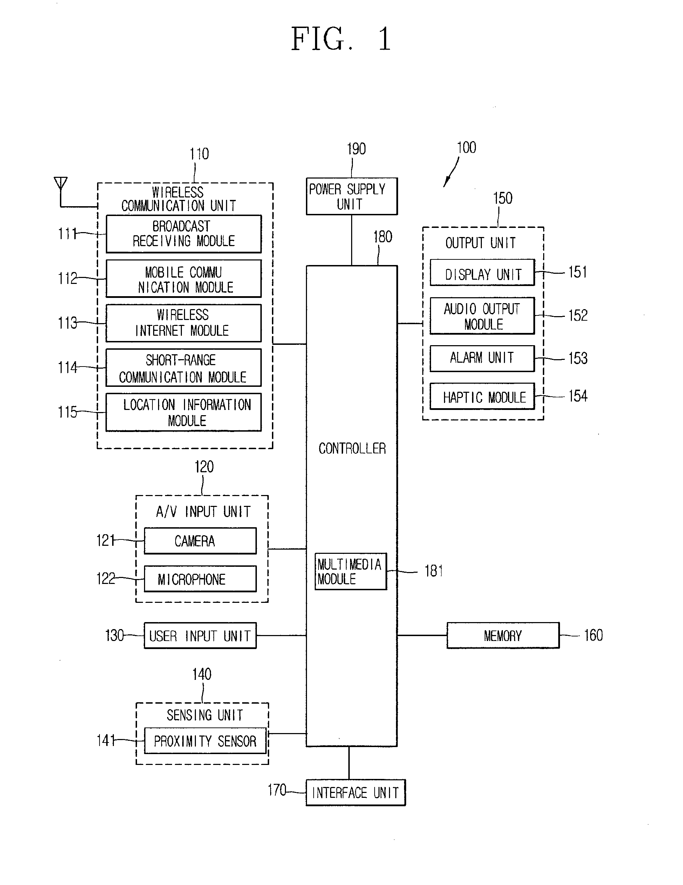

FIG. 1 is a block diagram of a mobile terminal 100 according to an embodiment of the present invention.

As shown in FIG. 1, the mobile terminal 100 includes a wireless communication unit 110, an A/V (AudioNideo) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. The mobile terminal 100 may be implemented by greater or fewer components.

Hereinafter, each of the above components will be explained.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast associated information may refer to information associated with a broadcast channel, a broadcast program or a broadcast service provider. The broadcast associated information may also be provided via a mobile communication network and, in this case, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The mobile communication module 112 is configured to implement a video call mode and a voice call mode. The video call mode indicates a call performed while a user views another party, whereas the voice call mode indicates a call performed while a user does not view another party. For implementation of the video call mode and the voice call mode, the mobile communication module 112 is configured to transceive at least one of voice data and image data.

The wireless Internet module 113 supports wireless Internet access for the mobile communication terminal. This module may be internally or externally coupled to the mobile terminal 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short-range communication module 114 is a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the like.

The location information module 115 is a module for acquiring a location (or position) of the mobile communication terminal. For example, the location information module 115 may include a GPS (Global Positioning System) module.

The AN input unit 120 is configured to receive an audio or video signal. The A/V input unit 120 may include a camera 121 and a microphone 122. The camera 121 processes image data of still pictures or video acquired by an image capture device in a video capturing mode or an image capturing mode. The processed image frames may be displayed on a display unit 151.

The image frames processed by the camera 121 may be stored in the memory 160 or transmitted via the wireless communication unit 110. Two or more cameras 121 may be provided according to the configuration of the mobile communication terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of a user's touch (contact) with the mobile terminal 100 (e.g., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, a haptic module 154, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call.

When the display unit 151 and the touch pad are overlaid in a layered manner to form a touch screen, the display unit 151 may function as both an input device and an output device. The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of these displays may be configured to be transparent so that outside may be seen therethrough, which may be referred to as a transparent display. A representative example of this transparent display may include a transparent organic light emitting diode (TOLED), etc. The rear surface of the display unit 151 may be transmissive. Under such configuration, a user can see an object located at rear side of the body through the display unit 151 of the body.

The display unit 151 may be implemented in two or more in number according to a configured aspect of the mobile terminal 100. For instance, a plurality of displays may be arranged on one surface integrally or separately, or may be arranged on different surfaces.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor may be arranged at an inner region of the mobile terminal covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The proximity sensor may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

In the following description, for the sake of brevity, recognition of the pointer positioned to be close to the touch screen without being contacted will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

The proximity sensor detects a proximity touch and a proximity touch pattern (e.g., a proximity touch distance, a proximity touch speed, a proximity touch time, a proximity touch position, a proximity touch movement state, or the like), and information corresponding to the detected proximity touch operation and the proximity touch pattern can be outputted to the touch screen.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., a call signal reception sound, a message reception sound, etc.) performed in the mobile terminal 100. The audio output module 152 may include a receiver, a speaker, a buzzer, etc.

The alarm unit 153 outputs a signal for informing about an occurrence of an event of the mobile terminal 100. Events generated in the mobile terminal may include call signal reception, message reception, key signal inputs, touch inputs, and the like. The alarm unit 153 may output not only video or audio signals, but also other types of signals such as signals notifying occurrence of events in a vibration manner. Here, the video signal or audio signal may be outputted through the display unit 151 or the audio output module 152. Accordingly, the display unit 151 or the audio output module 152 may be categorized as part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a map data, phonebook, messages, still images, video, etc.) that are inputted or outputted. Also, the memory 160 may store data relating to various patterns of vibrations and audio output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), a Universal Subscriber Identity Module (USIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

Once a preset condition of the mobile terminal is satisfied, the controlled 180 can execute a locked state for limiting a user's input of control commands with respect to applications. And, the controller 180 can control a locked screen displayed in the locked state, based on a touch input sensed by the display unit (hereinafter, will be referred to as 'touch screen' 151) in the locked state.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

Hereinafter, a structure of the mobile terminal of FIG. 1 according to an embodiment of the present invention will be explained.

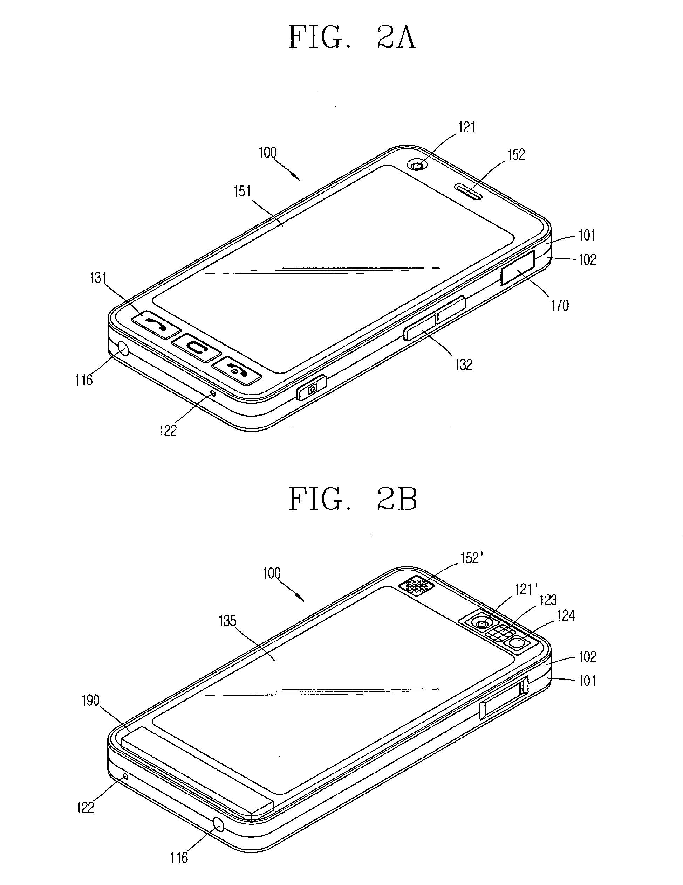

FIG. 2A is a front perspective view of the mobile terminal according to an embodiment of the present invention, and FIG. 2B is a rear perspective view of the mobile terminal of FIG. 2A according to an embodiment of the present invention

The mobile terminal 100 according to the present disclosure is a bar type mobile terminal. However, the present disclosure is not limited to this, but may be applied to a slide type in which two or more bodies are coupled to each other so as to perform a relative motion, a folder type, or a swing type, a swivel type and the like.

A body of the mobile terminal 100 has a front surface, side surfaces and a rear surface. The body has two ends in a lengthwise direction.

A case (casing, housing, cover, etc.) forming an outer appearance of the body may include a front case 101 and a rear case 102. A space formed by the front case 101 and the rear case 102 may accommodate various components therein. At least one intermediate case may further be disposed between the front case 101 and the rear case 102.

Such cases may be formed by injection-molded synthetic resin, or may be formed using a metallic material such as stainless steel (STS) or titanium (Ti).

At the front case 101, may be disposed a display unit 151, an audio output unit 152, a camera 121, user input units 130/131 and 132, a microphone 122, an interface unit 170, etc.

The display unit 151 occupies most parts of a main surface of the front case 101. The audio output unit 152 and the camera 121 are arranged at a region adjacent to one end of the stereoscopic display unit 151, and the user input unit 131 and the microphone 122 are arranged at a region adjacent to another end of the display unit 151. The user input unit 131, the interface unit 170, etc. may be arranged on side surfaces of the front case 101 and the rear case 102. On the other hand, the microphone 122 is arranged on another end of the body.

The user input unit 130 is manipulated to receive a command for controlling the operation of the mobile terminal 100, and may include a plurality of manipulation units 131 and 132. The manipulation units 131 and 132 may be referred to as manipulating portions, and may include any type of ones that can be manipulated in a user's tactile manner.

Commands inputted through the first or second user input units 131 and 132 may be variously set. For instance, the first manipulation 131 is configured to input commands such as START, END, SCROLL or the like, and the second manipulation unit 132 is configured to input commands for controlling a level of sound outputted from the audio output unit 152, or commands for converting the current mode of the display unit 151 to a touch recognition mode.

Referring to FIG. 2B, an audio output unit 152' may be additionally disposed at the rear case 102. The audio output unit 152' may implement a stereo function together with the audio output unit 152 (refer to FIG. 2A), and may be used for calling in a speaker phone mode.

A power supply unit 190 for supplying power to the mobile terminal 100 is mounted to the body. The power supply unit 190 may be mounted in the body, or may be detachably mounted to the body.

A touch pad 135 for sensing touch may be additionally mounted to the rear case 102. Like the display unit 151, the touch pad 135 may be formed to be light-transmissive. In this case, if the display unit 151 is configured to output visual information from two surfaces thereof, the visual information can be recognized through the touch pad 135. The information output from the two surfaces can be controlled by the touch pad 135. Alternatively, a display may be additionally mounted to the touch pad 135, so that a touch screen can be disposed at the rear case 102.

A camera 121' may be additionally provided on the rear case 102. The camera 121' faces a direction which is opposite to a direction faced by the camera 121 (refer to FIG. 2A), and may have different pixels from those of the camera 121.

For example, the camera 121 may operate with relatively lower pixels (lower resolution). Thus, the camera 121 may be useful when a user can capture his face and send it to another party during a video call or the like. On the other hand, the camera 121' may operate with a relatively higher pixels (higher resolution) such that it can be useful for a user to obtain higher quality pictures for later use. The cameras 121 and 121' may be installed at the body so as to rotate or pop-up.

A flash 123 and a mirror 124 may be additionally disposed adjacent to the camera 121'. The flash 123 operates in conjunction with the camera 121' when taking a picture using the camera 121'. The mirror 124 can cooperate with the camera 121' to allow a user to photograph himself in a self-portrait mode.

An audio output unit 252' may be additionally arranged on a rear surface of the body. The audio output unit 252' (refer to FIG. 2A) may cooperate with the audio output unit 252 (refer to FIG. 2A) so as to implement a stereo function. Also, the audio output unit may be configured to operate as a speakerphone.

A power supply unit 190 for supplying power to the mobile terminal 100 is mounted to the body. The power supply unit 190 may be mounted in the body, or may be detachably mounted to the body.

The touch pad 135 operates in association with the display unit 151 of the front case 101. The touch pad 135 may be disposed on the rear surface of the display unit 151 in parallel. The touch pad 135 may have a size equal to or smaller than that of the display unit 151.

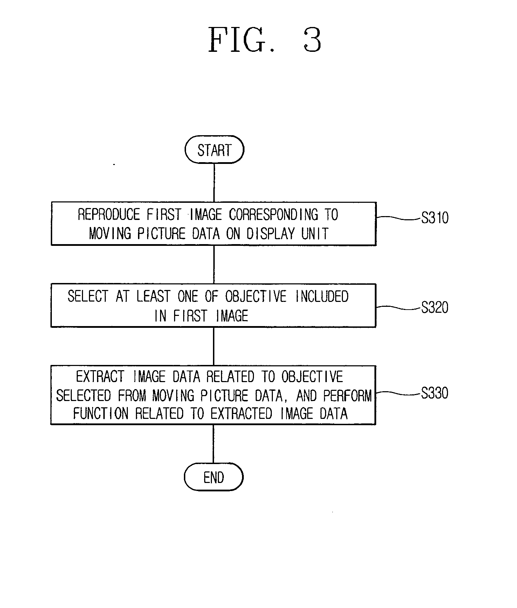

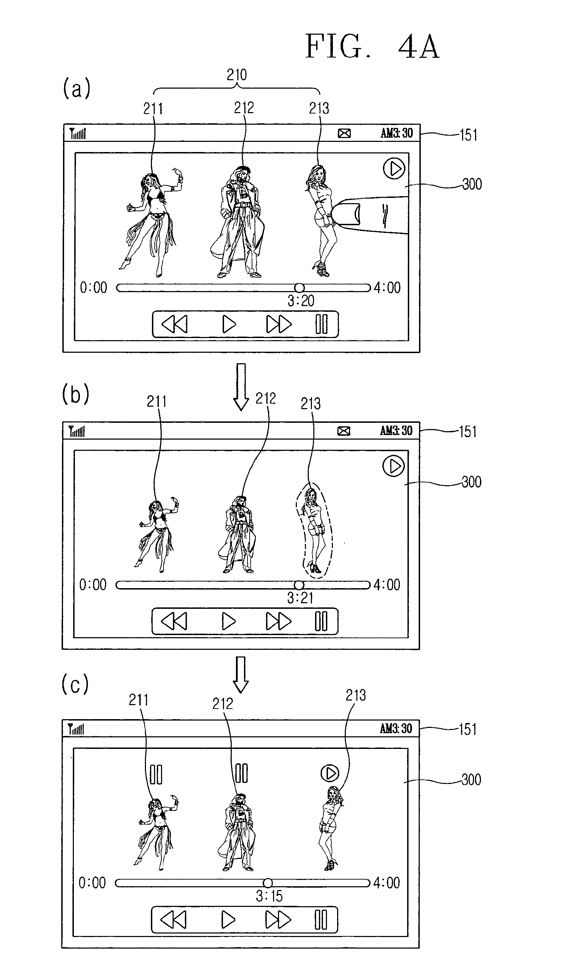

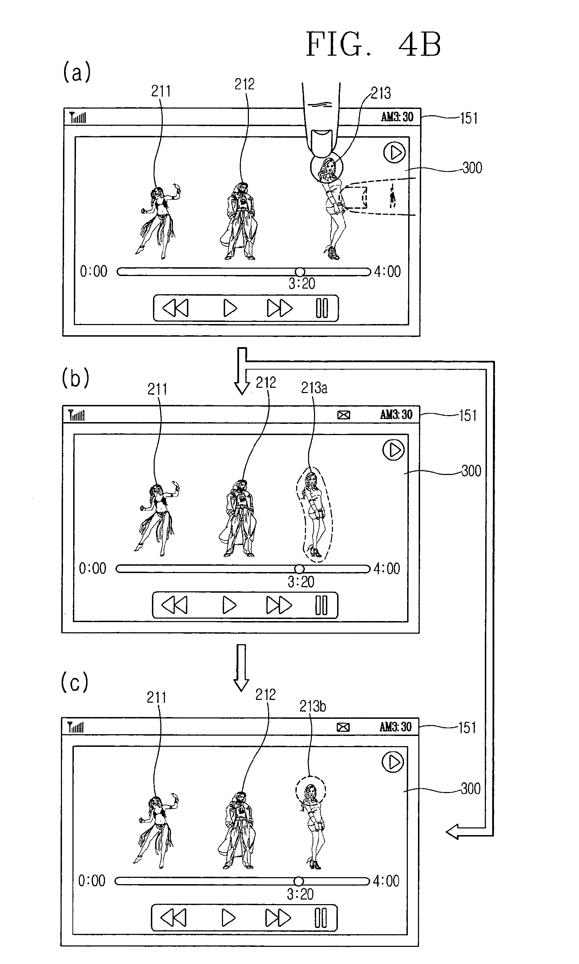

The control unit 180 of the mobile terminal according to the exemplary embodiment, which can include the components described above, may reproduce an image corresponding to moving picture data on the display unit 151, and extract image data for a specific objective included in the image. Thus, a user can separately watch an image for the specific objective, or can perform various functions using the image. Hereinafter, a method for extracting image data for a specific objective in moving picture data will be described as an example with reference to FIGS. 3, 4A and 4B.

First, in the mobile terminal according to the exemplary embodiment, the control unit 180 reproduces, on the display unit 151, a first image corresponding to moving picture data selected by a user (S310). As shown in FIG. 4A (a), a control-based GUI (e.g., a progress bar) for controlling the moving picture data may be output together with the first image on the display unit 151. The control-based GUI may be output together with the first image corresponding to the moving picture data, or may be output according to a situation (e.g., a user's selection or control of the control unit 180).

Here, the moving picture data may be a file having extensions such as avi, wmv, mpg, divx, mp3, mov, flv, mp4 and wave, and various reproducible extensions. The moving picture data may be stored in the memory unit 160, may be downloaded through the wireless communication unit 110, or may be downloaded in real time.

The image output on a reproduction region may include both a moving picture and a still image, and the moving picture is output during 'reproduction'.

As described in step S310, the control unit 180 receives at least one of objectives included in the first image, selected by the user, in the state where the first image is reproduced (S320) (See FIG. 3).

Here, the 'objective 210' included in the first image, as shown in FIG. 4A (a), may be an object or character displayed in the image (or first image) reproduced through the moving picture data. That is, the objective may be one component such as a person, animal or plant, which is included in the image, except a background of the image.

The objective included in the first image, as shown in FIG. 4A (a), may be selected through a touch input on the display unit 151. The touch input for selecting an objective in the image output on the display unit 151 may have a predetermined touch input.

As an example, the touch input for selecting an objective may be various types of touch inputs such as a long-touch input, a multi-tap touch input, a drag touch input and a flick touch input for a specific objective.

As another example, the touch input for selecting an objective, as shown in FIG. 4B (a), may be a touch input having an arbitrary trace surrounding at least one portion of the objective. If a touch input having a trace is sensed, the control unit 180 may entirely select an objective 213a displayed in the region to which the touch input is applied as shown in FIG. 4B (b), and may select only a region corresponding to the trace in an objective 213b displayed in the region to which the touch input is applied as shown in FIG. 4B (c). In this case, the user may receive only image data corresponding to a desired portion.

If at least one objective 213 is selected based on the touch input, the control unit 180 extracts image data related to the selected objective 213 from the moving picture data, and performs a function related to the extracted image data (S330) (See FIG. 3).

Here, the 'function related to the extracted image data' means that a second image corresponding to the extracted image data is reproduced, or that a specific function is performed using the extracted image data, such as transmission of the extracted image data to an external terminal.

That is, if a touch input for selecting any one objective 213 from the imageis sensed, the control unit 180, as shown FIGS. 4A (a) and (b), may perform a specific function using image data corresponding to the selected objective 213.

As an example, the control unit 180, as shown in FIG. 4A (c), may stop the reproduction of objectives 211 and 212 which are not selected from the objectives 211, 212 and 213 included in the image, and control the display unit 151 so that an image corresponding to the selected objective 213, i.e., only the extracted image is reproduced.

That is, the control unit 180 may control the display unit 151 so that the second image corresponding to the extracted image data is reproduced, corresponding to the selection of the objective 213. Thus, the control unit 180 can provide an image for the objective 213 in which the user is interested.

The control unit 180 may automatically store the extracted image data in the memory 160, or may store the extracted image data, based on a control command generated under the user's selection.

Meanwhile, it has been described in the exemplary embodiment that the control unit 180 receives at least one objective selected by the user in the state in which the first image is reproduced, the control unit 180 may receive at least one of objectives included in a still image even in the state in which the still image is corresponding to the moving picture data is output on the reproduction region in the mobile terminal according to the exemplary embodiment.

As described above, in the mobile terminal according to the exemplary embodiment, if at least one of the objectives included in the image corresponding to the moving picture data is selected, image data for the selected objective is extracted, and the extracted image data is produced, thereby providing an image for an objective that the user intends to watch in priority.

Hereinafter, a method for selecting an objective in an image, a method for reproducing the selected objective and a method for performing another function except the reproduction will be described in detail together with exemplary embodiments.

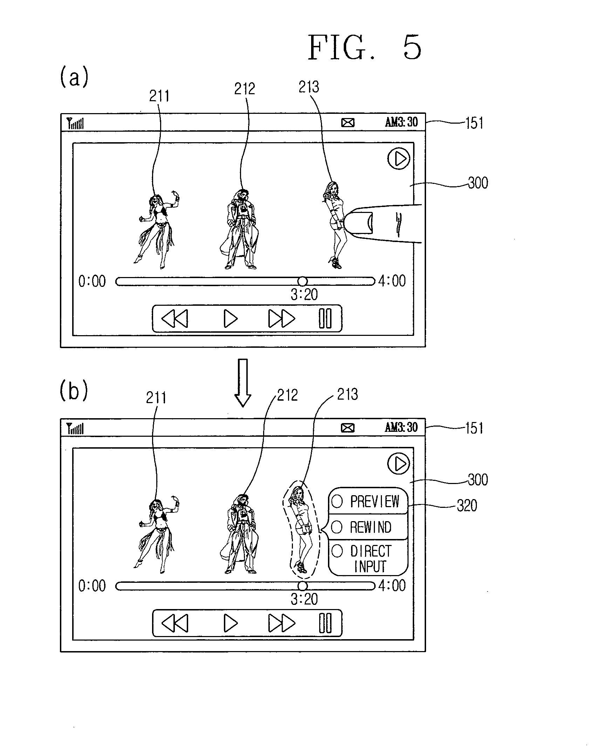

First, the image extracting section of image data extracted based on selection of an objective from an image will be described in detail with reference to the accompanying drawing. FIG. 5 is a conceptual view illustrating a method for selecting a reproduction section of a selected object in the mobile terminal according to the exemplary embodiment.

If an objective 213 is selected as shown in FIG. 5 (a), the control unit 180 extracts image data related to the selected objective 213.

Here, the extracted image data related to the selected objective 213 may be image data of a portion to be reproduced from now on, image data of a portion which has been already reproduced, or image data including both the portions, based on the time when the objective 213 is selected. That is, the control unit 180 may determine a section in which the image data is to be extracted, according to a user's selection or information set basically.

In a case where moving picture data is moving picture data downloaded in real time from an external server, and the image data of the portion to be reproduced from now on based on the time when the objective is elected is extracted, the control unit 180 may request the external server so that image data corresponding to the selected objective 213 can be transmitted earlier than that corresponding to other objectives. That is, in a case where the moving picture data is an image downloaded from the external server to be streaming-reproduced, the control unit 180 may previously receive a frame related to the selected objective in a predetermined range, transmitted from the external server, so that the selected objective can be tracked.

The control unit 180 may control the wireless communication unit 110 so that the entire moving picture data, instead of only the image data corresponding to the selected objective 213, can be downloaded at a speed faster than that for downloading existing moving picture data.

Meanwhile, if the objective 213 is selected as shown in FIG. 5 (a), a popup window 320 may be output on the display unit 151 so that the reproduction section of the second image corresponding to the selected objective 213 can be selected. The user may arbitrarily select, through the popup window 320, a section in which the user intends to again watch the second image corresponding to the selected objective 213.

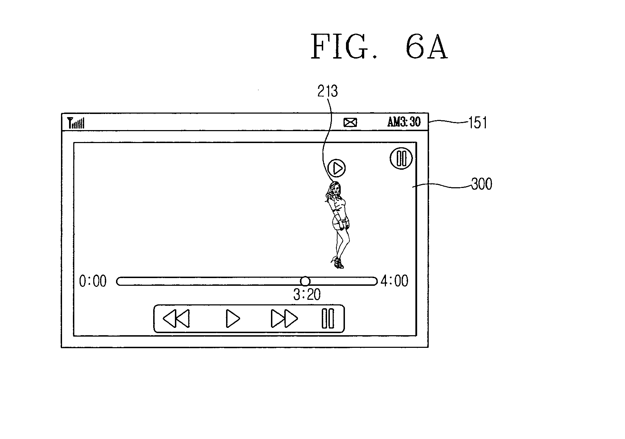

Hereinafter, a method for reproducing a second image corresponding to a specific objective when the specific objective is selected in a first image corresponding to moving picture data will be described in detail with reference to the accompanying drawings. FIGS. 6A to 6D are conceptual views illustrating a method for reproducing a selected object in the mobile terminal according to the exemplary embodiment.

As described above, if at least one objective included in the first image is selected in the state in which the first image for the moving picture data is reproduced or stopped in the mobile terminal according to the exemplary embodiment, the second image corresponding to the selected objective may be reproduced. Thus, the user can separately receive an image for the selected objective.

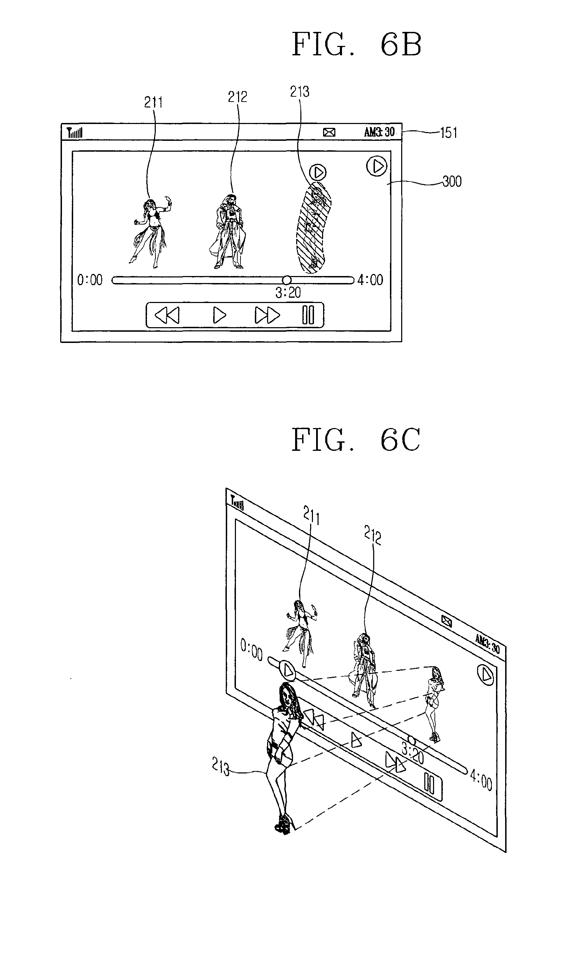

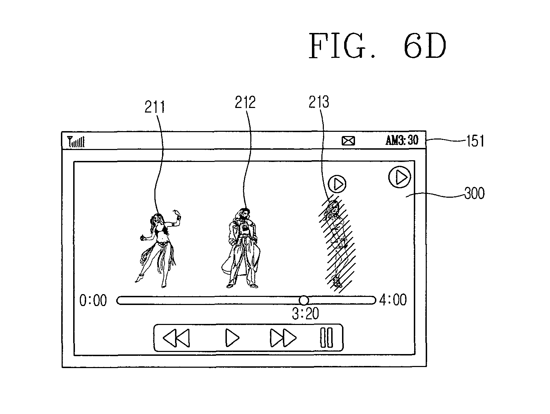

As an example, when the second image for the selected objective is reproduced, the control unit 180 may stop reproduction of other objectives except the selected objective (See FIG. 4A), or may not display the other objectives on the display unit 151 as shown in FIG. 6. Thus, the user can watch only the selected objective in priority. In this case, the control unit 180 may display, on the display unit 151, only the objective 213 selected in the state in which the other objectives are not displayed, and may reproduce, on the display unit 151, only the objective 213 selected in the state in which the other objectives are not displayed together with a background image.

As another example, the control unit 180, as shown in FIG. 6B, may change visual attribute information of the selected objective 213 so that the objective 213 selected from the first image corresponding to the moving picture data is distinguished from one or more other objectives 211 and 212 except the objective 213 selected from the first image.

That is, the control unit 180 may simultaneously display, on the display unit 180, the selected objective 213 and the one or more other objectives 211 and 212 except the selected objective 213. In this case, the selected objective 213 may be highlight-displayed.

Here, the method for highlighting the selected objective 213 may be performed in various manners including enlargement or reduction of the selected objective 213, change in color of the selected objective 213, display of flickering of the selected objective 213, change in transparency of the selected objective 213, etc. In this case, the one or more other objectives 211 and 212 except the selected objective 213 may be reproduced or stopped according to a user's selection or setting of the control unit 180.

Another example of changing the visual attribute information of the selected objective 213 will be described. As shown in FIG. 6C, the control unit 180 may control the display unit 151 so that the selected objective 213 is displayed as a three-dimensional stereoscopic image.

Meanwhile, as described above, the display unit 151 for outputting a three-dimensional stereoscopic image may be configured as a stereoscopic display unit for displaying a stereoscopic image. Here, the stereoscopic image represents a three-dimensional stereoscopic image, and the three-dimensional stereoscopic image is an image that allows a user to feel the depth and reality of an object positioned on a monitor or screen, identically to those of a real space.

The three-dimensional stereoscopic image is an image with which the user may feel a gradual depth and reality of a portion where an object is positioned on a monitor or screen in the same way as a real space. The three-dimensional stereoscopic image is implemented by using a binocular disparity. The binocular disparity refers to a parallax obtained by the positions of a user's two eyes away by about 65 millimeters from each other. When two eyes see mutually different 2D images, and the images then are transferred to the brain through a retina and merged, the user can feel the depth and reality of a three-dimensional stereoscopic image.

In this specification, the term "depth value" refers to an index that represents a difference in distance between objectives included in a three-dimensional stereoscopic image. More specifically, in a case where an objective displayed on the display unit 151 is seen in a two-dimensional shape by the user, the depth value of the objective may be defined as "0." However, the depth value of an objective seen in a three-dimensional shape protruded to the outside of the mobile terminal 100, based on the screen of the display unit 151, may be defined as a negative number. On the other hand, the depth value of an objective seen in a three-dimensional shape recessed to the inside of the mobile terminal 100, based on the screen of the display unit 151, may be defined as a positive number. In addition, as the position at which an objective is seen in a three-dimensional image having a shape protruded to the outside is close, the absolute value of the depth value of the objective increases. As the position at which an objective is seen in a three-dimensional image having a shape recessed to the inside is long, the depth value of the objective increases.

As such, the control unit 180 controls the display unit 151 so that the selected objective 213 has a depth value except zero, thereby distinguishing the selected objective from the other objectives 211 and 213.

As shown in FIG. 6D, the control unit 180 changes visual attribute information of the selected objective 213 and a region adjacent to the selected objective 213, in the state in which the depth value of the selected objective 213 is maintained as zero, so as to obtain a visual effect that the selected objective 213 is seen as a three-dimensional stereoscopic image. In this case, the control unit 180 changes at least one of brightness and contrast of the selected objective 213 and the region adjacent to the selected objective 213, so that the selected objective 213 can be displayed as a three-dimensional stereoscopic image.

As described above, in the mobile terminal according to the exemplary embodiment, a selected objective is displayed to be distinguished from other objectives, thereby providing a visual effect for the selected objective so that the user can concentrate on the selected objective.

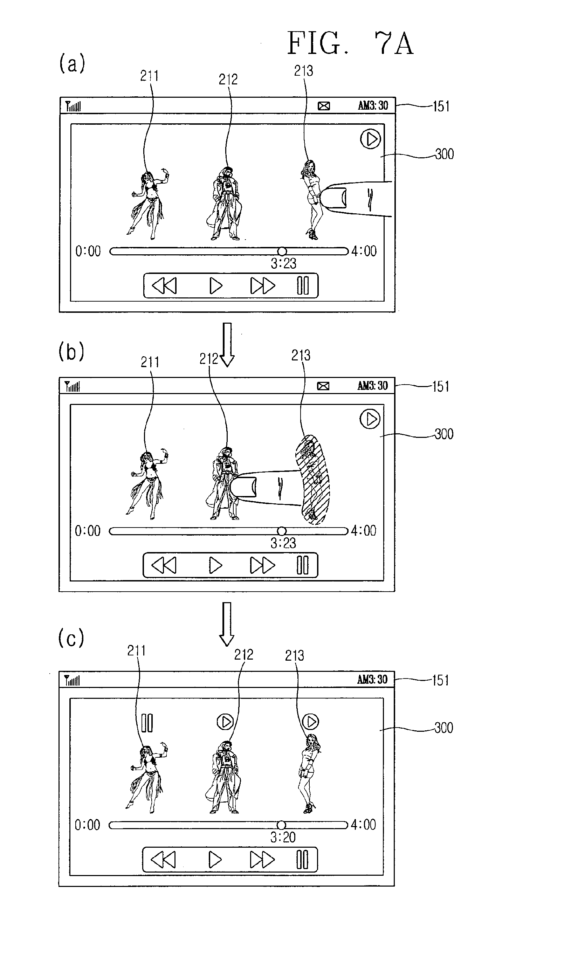

Meanwhile, in the mobile terminal according to the exemplary embodiment, it is possible to select a plurality of objectives based on a user's selection and to extract image data respectively corresponding to the plurality of objectives. Hereinafter, a method for selecting a plurality of objectives will be described in detail with reference to the accompanying drawings. FIGS. 7A to 7C are conceptual views illustrating a method for selecting a plurality of objectives in the mobile terminal according to the exemplary embodiment.

First, as shown in FIGS. 7A (a) and (B), the control unit 180 may control the user to select a plurality of objectives 212 and 213 through a touch input from the one or more other objectives 211, 212 and 213 included in the image corresponding to the moving picture data.

Here, the touch input for selecting the plurality of objectives 212 and 213 may be various types of touch inputs as described above, and the plurality of objectives 212 and 213 may be simultaneously selected through a multi-tap touch input. After any one objective 213 of the plurality of objectives 212 and 213 is first selected, the other objective 212 may be then selected. In this case, the control unit 180, as shown in FIG. 7A (b), may perform highlighting on the first selected objective 213 so as to inform the user that the first selected objective 213 exists.

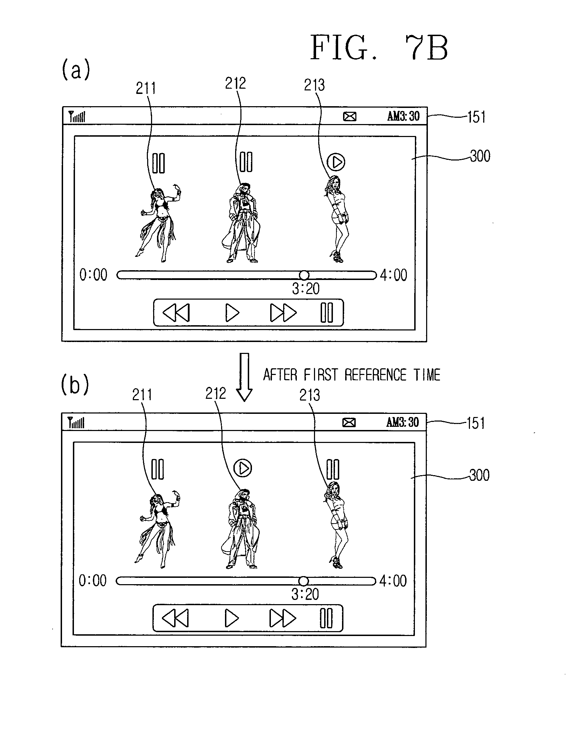

Meanwhile, in a case where the plurality of objectives 212 and 213 are selected as described above, the control unit 180, as shown in FIG. 7A (c), may simultaneously reproduce images respectively corresponding to image data corresponding to the plurality of objectives 212 and 213. The control unit 180, as shown in FIG. 7B (a) and (b), may sequentially output the images respectively corresponding to the image data corresponding to the plurality of objectives 212 and 213, based on a predetermined reference. Here, the predetermined reference may be an order in which the plurality of objectives 212 and 213 are selected or a production order separately set by the user.

For example, the control unit 180 may first output an image corresponding to image data corresponding to any one objective 213 of the plurality of objectives 212 and 213, based on the order in which the plurality of objectives 212 and 213 are selected. In this case, the control unit 180 may stop the other objectives when the image corresponding to any one of the plurality of objectives 212 and 213. Meanwhile, the images respectively corresponding to the image data corresponding to the plurality of objectives 212 and 213 may be sequentially reproduced by a predetermined time.

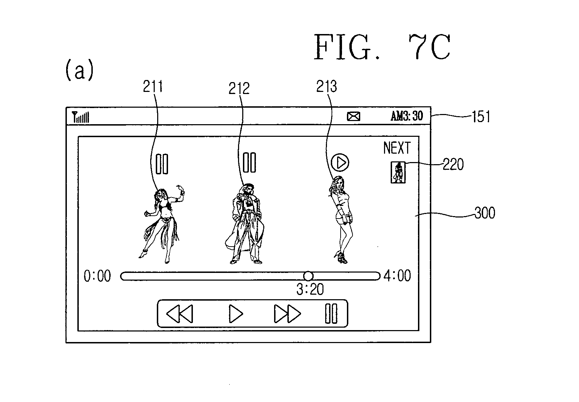

In a case where the images for the plurality of selected objectives 212 and 213 are sequentially output as described above, the control unit 180, as shown in FIG. 7C, may provide information on an objective to be reproduced next to the currently reproduced objective 213. For example, as shown in this figure, the control unit 180 may provide a thumbnail image for the next objective to be output, or may provided a preview image for the next objective to be output. In a case where the preview image is provided, the control unit 180 can control the user to simultaneously watch reproduction images for the plurality of objectives 212 and 213.

As described above, in the mobile terminal according to the exemplary embodiment, images for the plurality of objectives in an image corresponding to reproduced or stopped moving picture data can be provided sequentially or at different times.

Hereinafter, a method for providing a function related to a selected objective will be described in detail with reference to the accompanying drawings.

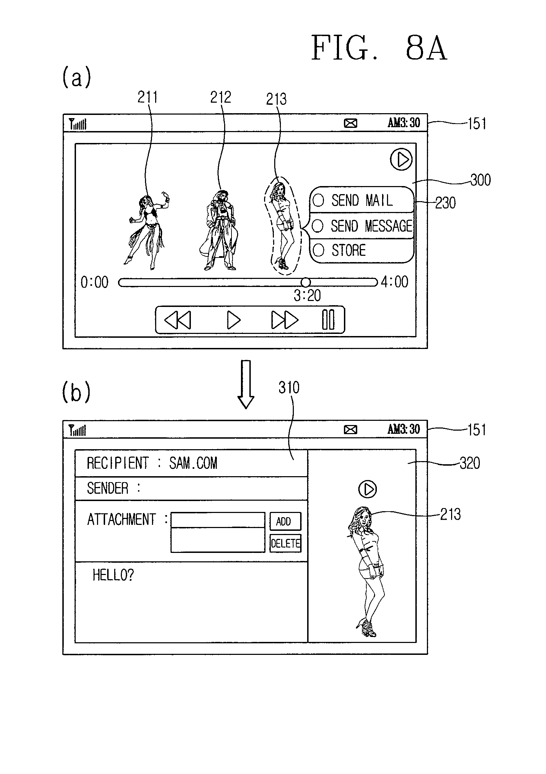

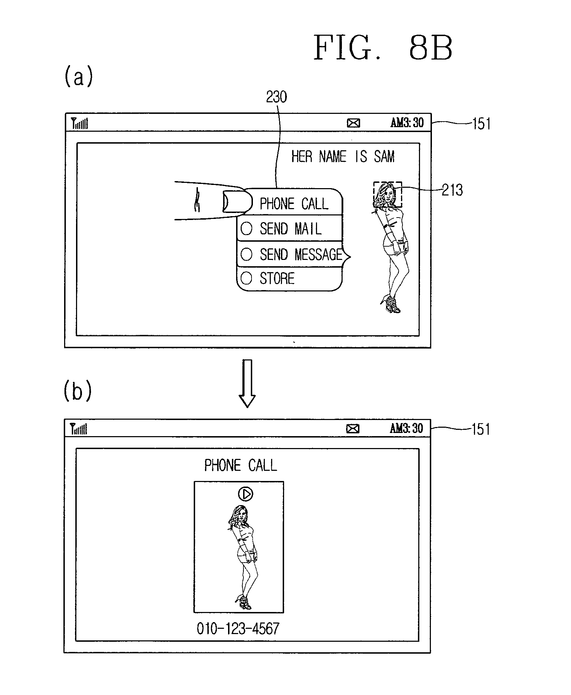

FIGS. 8A and 8B are conceptual views illustrating a method for performing a function related to a selected objective in the mobile terminal according to the exemplary embodiment.

In the mobile terminal according to the exemplary embodiment, if an objective 213 in the image corresponding to the moving picture data is selected as described above, the control unit 180 may provide an image corresponding to image data for the selected objective 213. Further, the control unit 180 may provide another function capable of using the image data for the selected objective 213. That is, if an objective in the image is selected by the user, the control unit 180 may search for at least one function which can be performed related to the selected objective 213 (See FIG. 8A (a)). Here, the at least one function may be a function, such as e-mail transmission, message transmission, call transmission, storage or upload to the external server, using image data extracted related to the selected objective, or a function using contact address information corresponding to the selected objective 213.

Meanwhile, if at least one function which can be performed related to the selected objective 213 (See FIG. 8A (a)) is searched as described above, the control unit 180, as shown in FIG. 8A (a), may output, on the display unit 151, one or more graphic images 230 (or icons) respectively corresponding to the searched functions so as to receive at least one of the searched functions, selected by the user.

If at least one of the one or more graphic images 230 is selected, the control unit 180, as shown in FIG. 8A (b), may output, on the display unit 151, an execution screen 310 of the function corresponding to the selected graphic image (e.g., a graphic image corresponding to "message transmission" as shown in FIG. 8A (a)). In this case, the control unit 180 may reproduce image data for the selected objective 213 in one region 320 on the display unit 151.

In a case where a function such as a function "e-mail transmission" capable of transmitting the image data for the selected objective to an external terminal is selected, the control unit 180 may automatically attach the image data for the selected objective.

Meanwhile, the control unit 180, as shown in FIG. 8B, may search for contact address information a person corresponding to the selected objective 213, using a face recognition algorithm. The control unit 180 may provide functions capable of using the searched contact address information. For example, if a function "phone call" is selected from the graphic images 230 respectively corresponding to the functions capable of using the searched contact address information as shown FIG. 8B (a), the control unit 180 may perform the function "phone call" by setting the searched contact address information as a recipient. In this case, as shown in FIG. 8B (b), the image corresponding to the selected objective 213 may be reproduced on a transmission screen.

As described above, in the mobile terminal according to the exemplary embodiment, an image for a selected objective is reproduced, and various functions capable of using the image corresponding to the selected objective are also provided, so that the user can reduce inconvenience in selecting a function related to the selected objective in a separate menu.

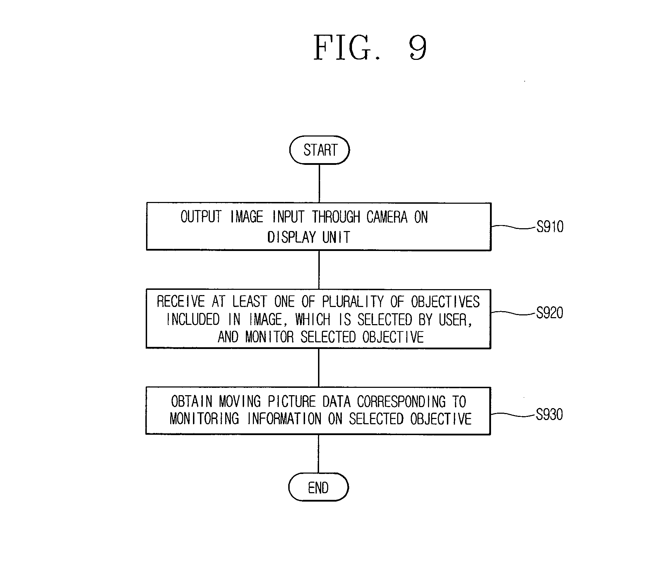

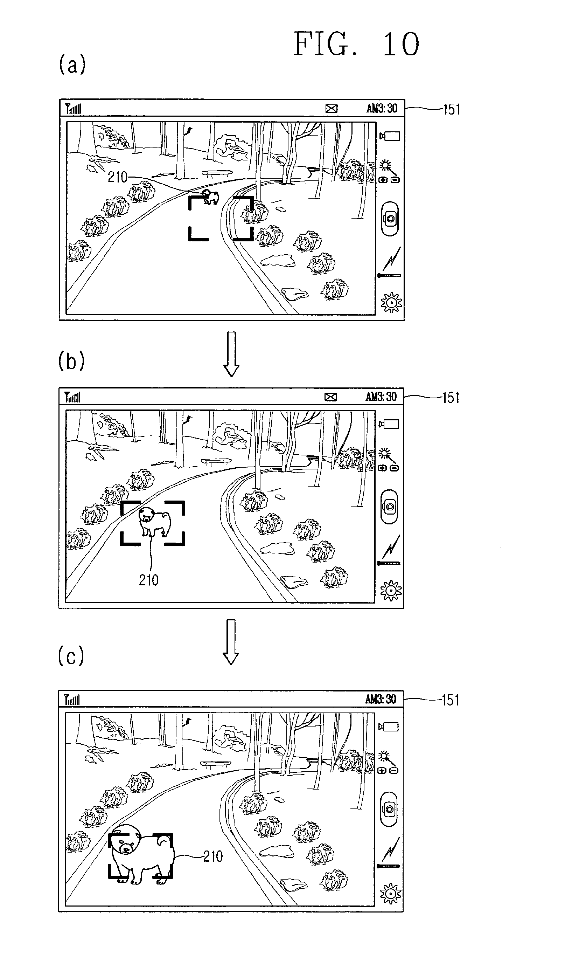

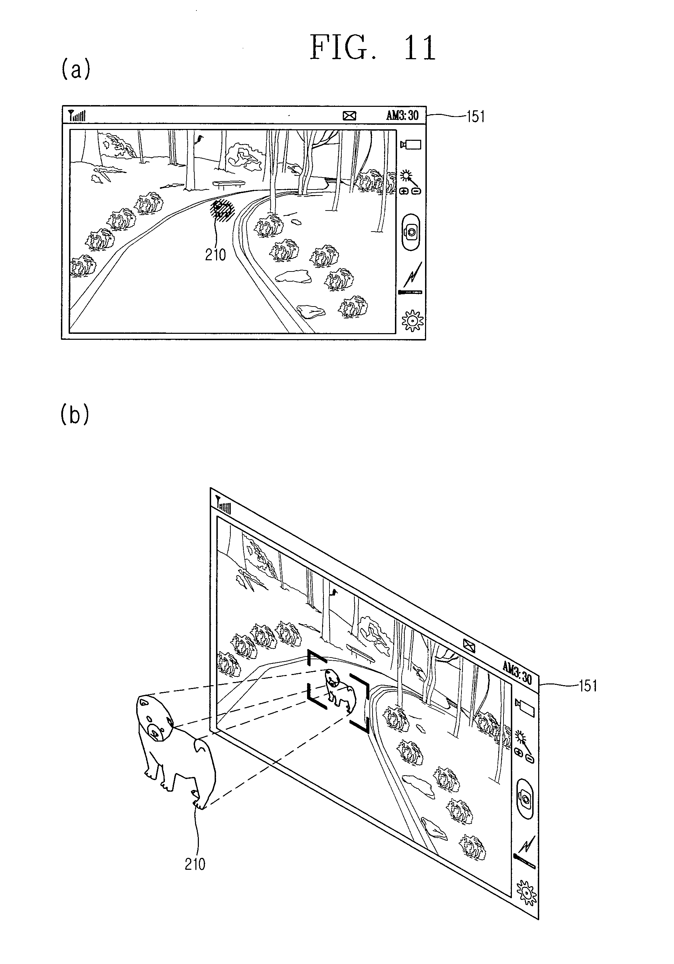

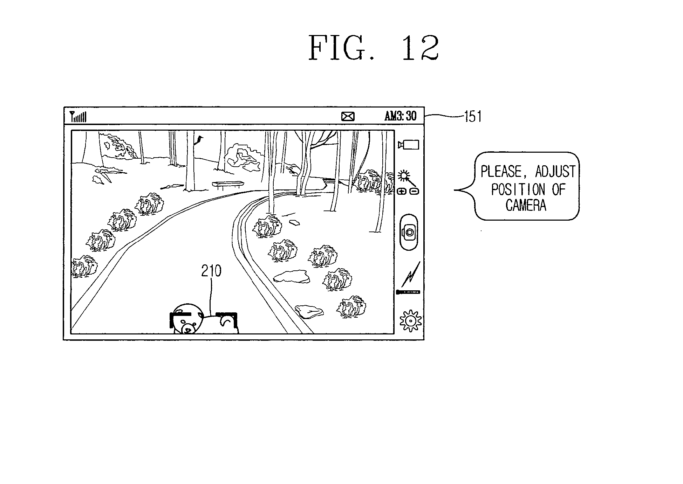

Meanwhile, in these exemplary embodiments described above, if a specific objective is selected from an image corresponding to moving picture data, an image for the selected objective is separately provided, so as to provide the user with a tacking function or the specific objective in the image corresponding to the moving picture data. Particularly, in the mobile terminal according to the exemplary embodiment, although the image corresponding to the moving picture data is not reproduced, it is possible to provide the user with the tracking function for the specific objective in an image input through a camera. Hereinafter, a method for providing a tracking function for a specific objective in an image input through a camera will be described in detail with reference to the accompanying drawings. FIG. 9 is a flowchart illustrating a control method for a mobile terminal according to another exemplary embodiment. FIGS. 10 and 11 are conceptual views illustrating the control method described in FIG. 9. FIG. 12 is a conceptual view illustrating a control method based on the movement of a selected objective in the mobile terminal according to the exemplary embodiment.

First, in the mobile terminal according to the exemplary embodiment, in a case where a camera function is performed, the control unit 180 outputs an image input through the camera on the display unit 151 (S910). If at least one of a plurality of objectives included in the image is selected by a user, the control unit 180 monitors the selected objective (S920). The control unit 180 may control a focus about the selected objective so as to monitor the selected objective. The control unit 180 may separately provide an image for the selected objective in one region on the display unit 151. The control unit 180 may control the magnification of a lens about the selected objective. Although a user's control command is not applied, the control unit 180 may store the image for the selected objective at a predetermined interval.

If the monitoring of the selected objective is performed, the control unit 180 obtains moving picture data corresponding to monitoring information on the selected objective (S930). Here, the section of the obtained moving picture data may be changed, based on a user's selection or information set basically. As such, although a control command for storing the image input through the camera is not applied, the control unit 180 obtains the moving picture data corresponding to the objective selected by the user, so as to provide the user with information on the objective in which the user is interested.

For example, if a specific objective 210 is selected from an image, the control unit 180, as shown in FIG. 10 (a), monitors the specific objective 210. In a case where the specific objective 210 moves in the image, the control unit 180, as shown in FIGS. 10 (b) and (c), continuously maintains a focus on the specific objective 210, thereby monitoring the specific objective 210.

As shown in FIGS. 11 (a) and (b), the control unit 180 may visually distinguish the selected objective 210 from one or more other objectives included in the image. The method for visually distinguishing the selected objective 210 from the one or more other objectives included in the image is identical to that described with reference to FIGS. 6A to 6D, and therefore, its detailed description will be omitted.

Meanwhile, in a case where the selected objective 210 is out of the view of the camera, as shown in FIG. 12, during the monitoring of the selected objective 210 in the image input through the camera, the control unit 180 may output alarm information for informing the user that the selected objective 210 has been out of the view of the camera, using at least one of a visual method (e.g., a popup window), an auditory method (e.g., a voice) and a haptic method (e.g., a vibration). In the mobile terminal according to the exemplary embodiment, as long as the camera controls the direction of the lens under the control of the control unit 180, the control unit 180 controls the lens of the camera, so that the selected objective 210 can be continuously monitored. In this case, the control unit 180 may not output the alarm information.

The embodiments applied to the objective selected from the image for the moving picture data can be identically applied to the objective selected from the image input through the camera.

As described above, in the mobile terminal and the control method therefor according to the exemplary embodiment, a specific objective selected by the user can be monitored in an image input through the camera. Thus, the user can receive information on the specific objective, regardless of the presence of photographing the image input through the camera.

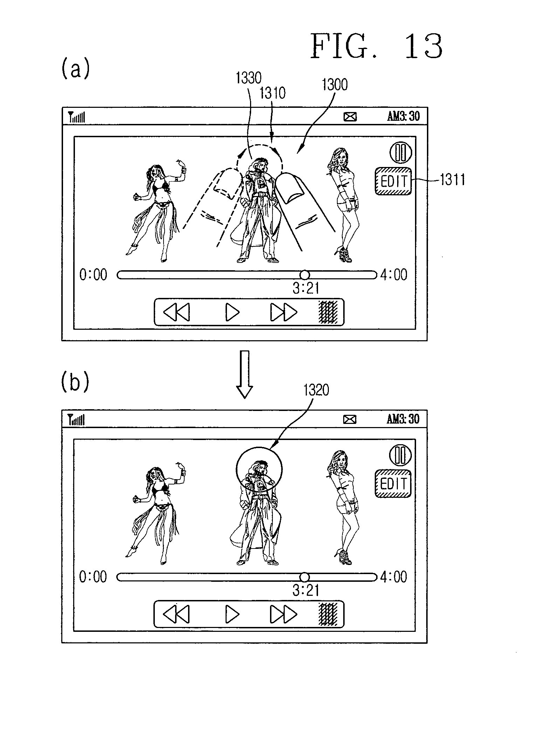

FIG. 13 is a conceptual view showing a method for editing an image in a mobile terminal according to an embodiment of the present invention.

Hereinafter, a method for editing an image corresponding to moving image data will be explained with reference to the attached drawings. FIG. 13 is a conceptual view showing a method for editing an image in a mobile terminal according to an embodiment of the present invention.

In the mobile terminal and the method for controlling the same according to an embodiment of the present invention, provided is an edition function with respect to an image corresponding to moving image data. For instance, while a moving image corresponding to moving image data is being played, or in a state where a still image has been output to the display 151 as the playing of the moving image is stopped, the controller 180 may activate an edition mode for editing an image corresponding to the moving image data, based on an applied control command.

If the control command is applied in a state where a moving image corresponding to moving image data is being played, the controller 180 may stop the playing of the moving image, and output a till image to the display 151. Here, the still image may be an image output to the display 151 at a time point when the control command has been applied.

As shown in FIG. 13A, a control command for activating an edition mode may be applied, based on a touch input with respect to a function icon 1311 for activating an edition mode.

Here, the edition mode indicates a mode for extracting at least part of an image corresponding to moving image data. In such edition mode, at least part of a still image may be selected, in a state where the still image has been output to the display 151.

As shown in FIG. 13A, at least part of a still image may be selected, based on a touch input with respect to the display 151. For instance, a user may select part 1310 of a still image by touching the display 151. Upon selection, the controller 180 may display the selected at least part 1320(FIG. 13B) in a recognizable manner by a user. Although not shown, even after the at least part 1320 has been selected, the controller 180 may change the position of the at least part 1320, or the selected scope based on a user's selection.

Although not shown, the controller 180 may output various shapes (e.g., triangle, quadrangle, pentagon, circle, etc.) for specifying at least part of an output image 1300. Accordingly, a user may select the image 1300 output to the display, using at least one of the various shapes. For instance, a user may select a desired shape among the various shapes, and then locate the selected shape to part to be selected from an image, thereby selecting at least part of the image in correspondence to the selected shape.

Rather than directly receiving any part of an image from a user, the controller 180 may select an object output to the image. That is, if at least part of the image 1300 to which an object 1330 has been output is selected, the controller 180 may determine that at least the object 1330 has been selected.

Here, a touch input for selecting an object may include various types of touch inputs, such as a long touch input, a multi tap touch input, a drag touch input and a flick touch input with respect to a specific object.

As another example, the touch input for selecting an object may be a touch input having any orbit which encloses at least part of the object 1330. Once such touch input having an orbit is sensed, the controller 180 may wholly select the object 1330 displayed on a region to which the touch input has been applied.

If at least part of the image is selected in an edition mode, the controller 180 may extract image data with respect to the selected at least part, and may perform a function associated with the extracted image data.

Here, 'the function associated with the extracted image data' means performing a specific function using an extracted image, e.g., storing an extracted image corresponding to extracted image data in the memory 160, or copying the extracted image, or transmitting to an external terminal.

Once the extracted image is generated, the controller 180 may automatically perform a copy function with respect to the extracted image, even though a control command is not applied from a user. That is, the controller 180 may temporarily store the extracted image in the memory 160. Accordingly, a user may immediately utilize the extracted image, on other application rather than an application corresponding to a moving image playing function, e.g., a memo function application. That is, if a control command corresponding to a 'paste' function is applied on other application, the controller 180 may output the extracted image on an execution screen (or graphic user interface: GUI) corresponding to said other application, so that the extracted image can be utilized on said other application.

Although not shown, the controller 180 may pop-up the extracted image on part of the display 151. In this case, the extracted image may be continuously output to the display 151, even if the moving image function application is ended. In case of popping-up the extracted image, the controller 180 may terminate the pop-up of the extracted image based on a user's selection. If other application is executed in a state where the extracted image has popped-up, the controller 180 may control the extracted image to be utilized on said other application, based on a user's selection.

As aforementioned, in the mobile terminal and the method for controlling the same according to an embodiment of the present invention, an edition function with respect to an image corresponding to moving image data is provided. This can allow more various functions to be provided.

Further, in the mobile terminal and the control method therefor according to the exemplary embodiment, image data for an objective selected by the user is extracted from moving picture data, and the extracted image data is provided to the user, so that the user can separately receive information on the selected objective.

According to an exemplary embodiment, the aforementioned method can be embodied as computer readable codes on a computer-readable recording medium. Examples of the computer readable recording medium include a ROM, RAM, CD-ROM, magnetic tapes, floppy disks, optical data storage devices, and carrier waves (such as data transmission through the Internet).

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a display unit(151) configured to reproduce a first image corresponding to moving picture data;
a user input unit(130) configured to receive at least one of objectives included in the first image, which is selected by a user; and
a control unit(180) configured to extract image data related to the selected objective from the moving picture data, and perform a function related to the extracted image data.

2. The mobile terminal of claim 1, wherein the control unit(180) controls the display unit(151) to reproduce a second image corresponding to the extracted image data.

3. The mobile terminal of claim 2, wherein, when the second image corresponding to the extracted image data is reproduced, other objectives, except the selected objective, included in the first image, are stopped, or are not displayed on the display unit(151).

4. The mobile terminal of claim 3, wherein the control unit(180) stores the extracted image data in a memory(160), based on a control command generated automatically or selected by the user.

5. The mobile terminal of claim 2, wherein, when a plurality of objectives are selected from the objectives included in the first image, the control unit(180) sequentially outputs images respectively corresponding to image data corresponding to the plurality of objectives, based on a predetermined reference.

6. The mobile terminal of claim 5, wherein the control unit(180) outputs image data respectively corresponding to the plurality of objectives, based on an order in which the plurality of objectives are selected, and other objectives are stopped when an image corresponding to any one of the plurality of objectives is reproduced.

7. The mobile terminal of any one of claims 1 and 2, wherein the control unit(180) changes visual attribute information of the selected objective so that the selected objective in the first image is distinguished from one or more other objectives except the selected objective in the first image.

8. The mobile terminal of claim 7, wherein the control unit(180) controls the display unit(151) to display the selected objective as a three-dimensional stereoscopic image.

9. The mobile terminal of claim 8, wherein the control unit(180) outputs the selected objective as a three-dimensional stereoscopic image by changing the three-dimensional depth value of the selected objective or by changing visual attribute information of the selected objective and a region adjacent to the selected objective.

10. The mobile terminal of any one of claims 1, 2 and 7 wherein the control unit(180) searches for at least one function to be performed related to the selected objected, and outputs, on the display unit(151), one or more graphic images respectively corresponding to the searched functions so as to receive any one of the searched functions, which is selected by the user.

11. The mobile terminal of claim 10, wherein, if any one of the one or more graphic images is selected, the control unit(180) outputs an execution screen of the function corresponding to the selected graphic image, and outputs image data corresponding to the selected objective in one region on the display unit(151).

12. The mobile terminal of any one of claims 1, 2, 7 and 10 wherein the control unit(180) extracts image data corresponding to a time range selected by the user or a reference time range from the moving picture data.

13. The mobile terminal of any one of claims 1, 2, 7, 10 and 12 wherein, when the first image is an image streaming-reproduced based on moving picture data received from an external server, the control unit(181) previously receives a frame in a predetermined range, related to selected objective, in the moving picture data so as to track the selected objective.

14. The mobile terminal of any one of claims 1, 2, 7 10, 12 and 13 wherein the selection of at least one objective from the first image is performed through a user's touch input while the first image is being reproduced or in the state in which the reproduction of the first image is stopped.

15. The mobile terminal of claim 14, wherein the control unit identifies an objective output at a point corresponding to a touch trace according to the touch input in the first image, and selects the identified objective.
